# EUROPEAN PATENT SPECIFICATION

(11) **EP 1 758 701 B1**
(45) Date of publication and mention of the grant of the patent: **22.08.2012**
(21) Application number: 04736887.3
(22) Date of filing: 15.06.2004
(51) Int. Cl.: C22C 1/04, B22F 3/17, B22F 3/20, C22C 1/05, B22F 1/00

(54) **FLUX-CONTAINING BRAZING AGENT BRAZED AT LOW TEMPERATURE**
FLUSSMITTELHALTIGES, BEI NIEDRIGER TEMPERATUR GELÖTETES HARTLÖTMITTEL
PRODUIT D'APPORT DE BRASAGE CONTENANT DU FLUX POUR BRASURE A BASSE TEMPERATURE

(43) Date of publication of application: 07.03.2007
(73) Proprietor: Sunkwang Brazing Filler Metal Co. Ltd., Shinbuk-Myun Pochun-Geun, Gyounggi-Do 487-913 (KR)
(72) Inventor: KIM, Myoung-Jin, 21-403, Hongyeon APT, Seoul, 120-827 (KR)
(74) Representative: Kilian, Helmut
(86) International application number: PCT/KR2004/001420
(87) International publication number: WO 2005/123309

(56) References cited:
- EP-A1- 0 674 966
- EP-A2- 0 705 960
- EP-A2- 1 127 653
- JP-A- 2001 138 038
- KR-A- 19990 083 652
- KR-A- 19990 083 652
- US-A- 5 330 090

## Description

### Technical Field

The present invention pertains, in general, to a brazing material, which is used to braze the same or different kinds of metal members with each other and, more particularly, to a flux-containing brazing material adapted to be brazed at low temperatures, which realizes a simplified brazing process and a low temperature brazing process by molding mixed powder of a zinc-based alloy powder, and a cesium fluoride-based flux, into a predetermined shape, or causing the mixed powder to become a paste.

### Background Art

A brazing process, which is a technology of joining the same or different metal members together using a filler metal with a lower melting point than object metals, has been applied to various fields ranging from the joining of precious metals, such as gold and silver, to the joining of pipes of automobiles, refrigerators, and heat exchangers.

In a conventional brazing process, after a liquid flux is applied on target portions of object metal members, which are to be brazed, a brazing filler metal is located on the flux applied on the object metal members and heated so that the brazing filler metal is molten to fill a gap between the target portions of the object metal members and to be solidified in the gap while oxides formed on surfaces of me metal members are removed, thereby achieving the brazing of the object metal members.

However, the conventional brazing process is disadvantageous in that since the brazing filler metal is molten by heat while being located on the flux applied on the target portions of the object metal members after the flux is applied on the target portions, the process is complicated, and that it is difficult to apply a proper amount of flux on desired portions of the object metal members because the liquid flux previously applied on the target portions of the object metal members runs down from the surfaces of the object metal members.

In order to avoid the above disadvantages including the application of the flux, there is suggested a flux-containing brazing filler material, produced by molding a mixture of a brazing filler metal and a flux into a predetermined shape, which has been developed by the applicant of the present invention, as disclosed in Korean Pat. Registration No. 297609 and KR 1999 0083652A, respectively. In this patent, chloride- or fluoride-based flux powder is uniformly mixed with an aluminum alloy powders, the mixture is charged in a molding vessel and powder-forged to form cylindrical billets, and the billets are extruded into a predetermined shape, such as pipes or wire rods, after being previously heated to about 500°C, thereby accomplishing the flux-united brazing filler material.

In the case of brazing metal members using the flux-united brazing filler material molded in a 3-D shape, since the brazing of the metal members is achieved by only heating the brazing filler material, which is shaped such that the brazing filler material has a corresponding shape to the target portions of the metal members, while the brazing filler material is positioned on the target portions, to melt it, the disadvantages of the conventional brazing process, adopting the application of the flux, are avoided.

Meanwhile, a brazing temperature is considered as one of factors affecting the economic efficiency of the brazing process. With respect to this, the higher brazing temperature inevitably brings about higher brazing costs because of maintenance of a high heating temperature and leads to poorer physical properties of internal structures of the metal members because of exposure of the metal members to high temperatures. Therefore, there remains a need to develop a brazing filler material molten at low temperatures.

However, in the case of the flux-united brazing filler material according to the above patent, since the aluminum alloy and flux powders constituting the brazing filler material have relatively high melting points of about 600°C and 550°C, respectively, it is necessary to maintain the heating temperature at about 600°C or higher during the brazing process, and thus, economic efficiency is insufficiently assured.

Furthermore, Japanese Pat. Laid-Open Publication No. 2001-138038 recites a brazing filler metal adapted to be brazed at a temperature of 500 to 550°C, that is lower than a conventional brazing temperature, which includes a Zn-Al alloy or an Al-Si-Zn alloy, and which is used in conjunction with a CsF-based flux.

That is to say, in the above Japanese patent, the brazing filler metal contains the Zn-Al alloy or Zn-Al-Si alloy mostly consisting of Zn (melting point: 419.6°C), which is one of low melting point metals, to have a relatively low melting point of. 450 - 550°C, and the CsF-based flux (for example, CsF-AlF₃) with a low melting point of 450 - 550°C is used in conjunction with the brazing filler metal, thereby making the brazing at low temperatures possible.

However, even though the brazing filler metal of the Japanese patent can be brazed at the low temperatures, since the brazing filler metal, produced by extruding cast alloy into a wire rod after the Zn-Al alloy or Zn-Al-Si alloy is cast, does not contain any flux, the brazing is conducted according to the conventional brazing process, in which after the liquid flux is applied on the surfaces of the metal members, the metal brazing filler metal is positionel on the flux-applied metal members and then heated. Accordingly, the above Japanese patent has the disadvantages, regarding the application of the flux, of the conventional brazing process as before.

EP 0 705 960 A2 discloses a method wherein a valve seat is brazed to a cylinder head by using an Al-Zn type brazing material and a fluoride type flux. In the brazing method of EP 0 705 960 A2 the brazing material and the flux are provided and placed separated from each other at the brazing site. Consequently, the brazing material as provided and used in EP 0 705 960 A2 does not contain any fluoride-type flux.

EP 1 127 653 A2 discloses a composition for brazing aluminium comprising a fluoride flux, at least one binder selected from the group consisting of a alkyd resin, a mixture of an acrylic resin and a butyl rubber (or a petroleum resin), and a polyethylene resin, an organic solvent, and optionally a metallic powder for brazing.

US 5 330 090 A2 discloses a flux-containing aluminium alloy brazing agent consisting essentially of a compacted powder mixture of an aluminium element, a silicon element and the flux, wherein silicon is contained at 3-15% by weight of all elements other than the flux, and the ratio in weight of all elements other than the flux to the flux is from 99,9:0,1 to 70:30, and wherein the apparent density is 90% or more of a theoretical density.

EP 0 674 966 A1 discloses a brazing composition for brazing a tube made of aluminium or aluminium alloy and a fin made of aluminium or aluminium alloy when manufacturing a heat exchanger, wherein the brazing composition comprises a powder of Al-Si-Zn alloy and a binder, wherein the content of Zn in the powder of said Al-Si-Zn alloy is in a range of 10 to 55 wt%.

### Disclosure of the Invention

Accordingly, the present invention has been made keeping in mind the above disadvantages occurring in the prior arts, and an object of the present invention is to provide a flux-containing brazing material adapted to be brazed at low temperatures, which contributes to simplification of a brazing process because metal powder for brazing use and flux powder are mixed and united with each other through a mechanical molding process to enable the brazing process to be achieved while omitting a flux application step, and which contributes to improvement in a brazing quality by a proper control of an amount of the flux powder. Additionally, the flux-containing brazing material can improve workability of the brazing process by reducing a melting point of the brazing material to a temperature lower than that of- a conventional brazing filler metal, and can be used to braze different kinds of metal as well as the same kind of metals.

### Brief Description of the Drawings

The above and other objects, features and other advantages of the present invention will be more clearly understood from the following detailed description taken in conjunction with the accompanying drawings, in which:
FIGS. 1a to 1d illustrate the production of a ring-shaped brazing material according to the present invention;
FIG. 2 illustrates a brazing process of pipes using the ring-shaped brazing material of FIG. 1;
FIG. 3 illustrates a brazing process of pipes using a wire rod-shaped brazing material according to the present invention;
FIG. 4 illustrates a brazing process of flat bars using a paste-type brazing material;
FIG. 5 illustrates a brazing process of a main body of an electric motor rotator, an aluminum flange, and a a steel shaft using a paste-type brazing material;
FIG. 6 illustrates a brazing process of an electrical contact point *spring material and copper using a paste-type brazing material;
FIG. 7 illustrates a brazing process of a steel shaft using a brazing maters according to the present invention; and
FIG. 8 illustrates a formation of an edge portion of an aluminium toothed wheel using a brazing material according to the present invention.

### Best Mode for Carrying Out the Invention

Based on the present invention, the above object can be accomplished by providing a flux-containing brazing material adapted to be brazed at lower temperatures, which is molded in a 3-D shape by machining mixed powder, as defined in claim 1. The term "part by weight" means a mixing ratio of compositions expressed in a weight unit, and the mixed powder includes 10 - 40 g of flux powder on the basis of 100 g of alloy powder.

Since the alloy powder, exemplified by a Zn-Al binary alloy or a Zn+Al+Si ternary alloy, mostly consists of Zn with a low melting point, a brazing temperature is reduced in use of the flux-containing brazing material, and Al or Al+Si added to Zn functions to improve physical properties such as strength and elongation, of the brazing material, which cannot be achieved by Zn.

At this time, the amount of Al or Al alloy added to Zn is 10 - 40 wt%. In such a case, when the amount of Al or Al alloy is less than 10 wt%, the strength and elongation of the brazing material are significantly reduced, and when the amount of Al or Al alloy is more than 40 wt%, the brazing temperature is

undesirably increased to exceed a predetermined level.

The alloy powder with the composition as described above has a melting point of 450 - 500°C.

Additionally, instead of the Zn+Al+Si alloy, a Zn+Al+Ag alloy may be used to further improve brazing strength of a brazed portion, a Zn+Al+Cu, Zn+Al+Ni, or Zn+Al+Mn alloy may be used to improve corrosion resistance of the brazed portion, and a Zn+Al+Sn alloy may be used to lower a melting point.

Further, it is preferable that a particle size of the alloy powder is 30 meshes (550 µm) or less while being larger than that of the flux powder, because when the particle size of the alloy powder is"relatively larger than that of the flux powder, a rupture does not occur and a sintering process is easily conducted during a second process, such as punching, beating, or bending processes, subsequent to an extrusion process.

Accordingly, it is preferable to use the alloy powder including coarse particles. However, since the particle

size of the alloy powder must be adjusted so that an uniform dispersion of the flux powder is not hindered, the particle size of the alloy powder is preferably 30 meshes or less.

At this time, it is preferable that a particle size distribution of the alloy powder is wide enough to improve pack properties and an extrusion density in the course of producing billets.

connected to each other.

If the particle size of the alloy powder is similar to that of the flux powder and a particle size difference between the alloy powder and flux powder is not large, it is inevitable that oxides are increased due to an increase of surface areas of particles of the alloy powder. With respect to this, the increase of the oxides may reduce the workability of the extrusion process to hinder the extrusion process, and the oxides may serve as a breaking point of an extrusion wire rod because the oxides destroyed curing the extrusion process exist in the extrusion wire rod.

An amount of the flux powder constituting the brazing material according to the present invention is 10 - 40 parts by weight based on 100 parts by weight of alloy powder. In such a case, when the amount of the flux ponder is less than 10 wt%, the fluidity of the brazing materiel is reduced during a brazing process, and thus, the brazing material insufficiently floss into a gap between object members, and when the amount of the flux powder is more than 40 wt%, the fluidity of the brazing material is significantly increased, and this, the brazing materiel may flow out of the gap between the object members and run down the object members, bringing about the poor brazing of the object members.

Meanwhile, a liquid binder may be added to the alloy and flux powders to form a paste, instead of forming an extruded body with a predetermined shape by extruding the mixed powder of the alloy and flux powders. In this case, which is not part of the present invention, the paste-type brazing material includes 100 parts by weight of Zn alloy powder, containing 10 - 40 wt% of Al or Al+Si, and Zn as the balance; 10 - 40 parts by weight of cesium fluoride-based flux powder; and 10 - 30 parts by weight of liquid organic binder. At this the organic binder includes a thermoplastic resin acting as a binder and a solvent for dissolving the resin mixed with each other in a weight ratio of 1/1 - 1/100.

In the paste-type brazing material, physical properties, such as the composition and particle size, of the alloy and powder are the same as the case of the extruded powder body with a predetermined shape, but it is preferable that a particle size of the alloy powder of the paste-type brazing material is smaller than that of the brazing material with the 3-D shape, and that its average particle size is 100 - 200 meshes. When the average particle size of the alloy powder is more than 200 meshes, the paste-type brazing material becomes rough, and thus, it is difficult to apply the paste-type brazing material on the object members, and when the average particle size of the alloy powder is less than 100 meshes, surface areas of particles of the alloy powder are increased, leading to an oxidation of the brazing material during the brazing process.

Meanwhile, examples of the liquid organic binder added to the paste-type brazing material may include a thermoplastic resin, such as polyacrylic acid butyl, which leaves only few remainders after being combusted, and in the case of using polyacrylic acid butyl as the binder, it is preferable to use lower aliphatic alcohol, such as methyl alcohol, ethyl alcohol, propanol, butanol, iso-butyl alcohol, and iso-propyl alcohol as the solvent.

The alloy powder may be mixed with the flux powder according to the following various methods:
1. A method including adding alloy powder for brazing use into a flux in the course of converting a liquid flux into a solid flux, and drying the resulting mixture.
2. A method including mixing a flux and cooling liquid for quenching use, and atomizing alloy powder for brazing use using an atomizer while colliding the resulting liquid mixture to the atomized alloy powder, thereby applying the flux on a surface of the atomized alloy powder while cooling the alloy powder.
3. A method including simply mixing solid flux powder and alloy powder for brazing use which have a particle size of hundreds of microns.
4. A method including previously shaping alloy powder for brazing use into a porous body, dipping the porous body into a liquid flux or applying the liquid flux to a surface of the porous body, to allow the porous body to absorb the liquid flux to a capillary action, drying the resulting body, and pulverising the dried body. Instead of the above processes, the mixing of the alloy and flux powders according to the present invention may be conducted according to various other methods known in the art.
   The mixed powder of the alloy powder for brazing use and flux powder is subjected to a powder forging process in a molding vessel to form billets with a shape of cylinder and the like.

In this respect, the melting points of the alloy and flux powders were 480°C and 450°C, respectively.

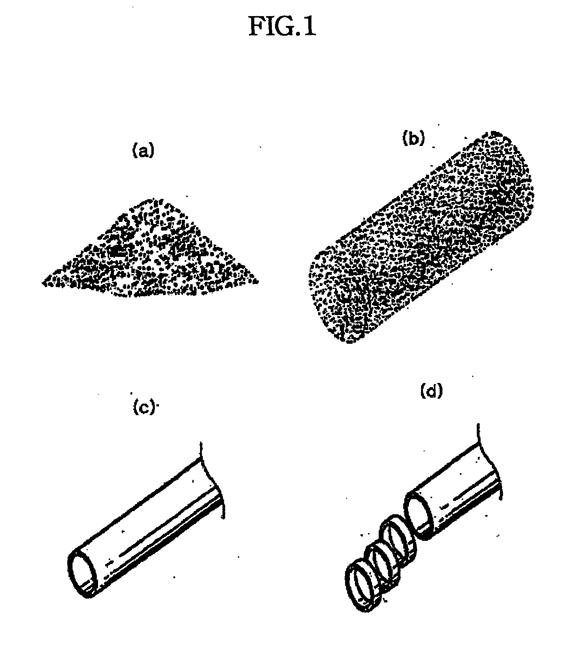

Subsequently, the mixed powder, containing the alloy and flux powders, was charged into a cylindrical molding vessel and subjected to a powder forging process to form a billet with a diameter of 85 mm and a length of 300 mm as shown in FIG. 1b. Thereafter, the billet, which was preliminarily heated at about 200°C, was extruded into a pipe with an internal diameter of 8.2 mm and an external diameter of 11.2 mm using an extruder for forming pipes as shown in FIG. 1c. In such a case, since a temperature of the extruded billet was higher than a recrystallization temperature of the alloy powder, the alloy and flux powders were semi-molten during a hot extruding process, bringing about deformation of the alloy powder. Therefore, particles constituting the alloy powder are bonded to each other, thereby allowing an extruded brazing material to have predetermined strength.

The pipe was then cut into a plurality of ring-shaped brazing materials with a width of 1.5 mm, having the same shape and size, as shown in FIG. 1d.

### EXAMPLE 2

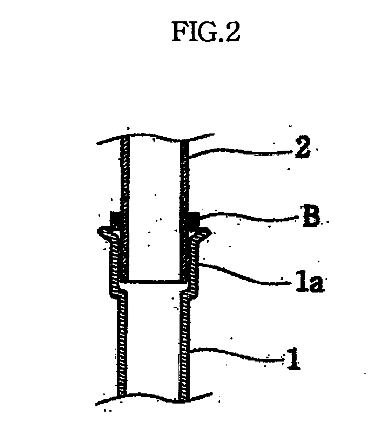

Different metal pipes, that is, aluminum and copper pipes 1,2 were brazed with each other using the brazing material according to example 1, as illustrated in FIG. 2. In this case, the copper and the aluminum pipes 1, 2 had the same external diameter and thickness, and each had an internal diameter of 8 mm and the thickness of 0.8 mm.

The copper pipe 1 was expanded at an end thereof, so that an expanded portion of the copper pipe 1 had a length of 9 mm and acted as a socket 1a to allow the aluminum pipe 2 to be plugged into the copper pipe 1.

After the aluminum pipe 2 was plugged into the socket 1a of the copper pipe 1 at an end thereof while the ring-shaped brazing material (B) according to example 1 being fitted around the end of the aluminum pipe 2, the aluminum pipe 2 and copper pipe 1 were located in an electric furnace while the aluminum pipe 2 being plugged into the socket 1a of the copper pipe 1, and heated at 520°C for 5 min. In this case, nitrogen gas was fed into the electric furnace at a flow rate of 2 m³/min.

The resulting structure was taken out of the electric furnace and cooled at room temperature, and a cooled brazed portion of the copper and aluminum pipes 1, 2 was observed by a naked eye. By the observation, it was found that the brazing material is solidified while fully filling a gap between an internal surface of the socket of the copper pipe 1 and an external surface of the aluminum pipe 2.

A pressure test of the resulting pipe was conducted, resulting in the finding that the brazed portion endured well against internal pressure of 140 kgf/cm² even though a portion of the aluminum pipe, spaced from the brazed portion, was ruptured. In the case of a tension test, the brazed portion was not ruptured until another portion of the aluminum pipe, spaced from the brazed portion, was ruptured. Thus, when the aluminum pipe was brazed with the copper pipe using the brazing material according to the present invention, the brazed portion had superior strength compared to the copper and aluminum pipes and an excellent brazing quality.

### EXAMPLE 3

A brazing material, having the same composition as that of example 1, was produced according to the same procedure as example 1 except that a flux, containing CsAlF₄ and a small amount of LiF mixed with each other, was used to improve an effect of the flux, and that a weight ratio of CsAlF₄ and LiF was 10:1.

Li contained in the flux functioned to improve the spreadability of the brazing material during a brazing process, to prevent a brazed portion from being oxidized, to remove oxygen and sulfur from metals, and to improve thermal conductivity.

The brazing of pipes were conducted according to the same procedure as example 2, and pressure and tension tests for the brazed portion of the resulting pipe were carried out according to the same manner as example 2, leading to the desirable results like in example 2.

### EXAMPLE 4

A brazing material, having the same composition as that of example 1, was produced according to the same procedure as example 1 except that a flux, containing CsAlF₄ and a small amount of KAlF₄ mixed with each other, was used to improve an effect of the flux, and that a weight ratio of CsAlF₄ and KAlF₄ was 10:1.

The brazing of pipes were conducted according to the same procedure as example 2 with the exception of a temperature of an electric furnace being set to 550°C for 8 min, and pressure and tension tests for a brazed portion of the resulting pipe were carried out according to the same manner as example 2, leading to the desirable results like in example 2.

### EXAMPLE 5

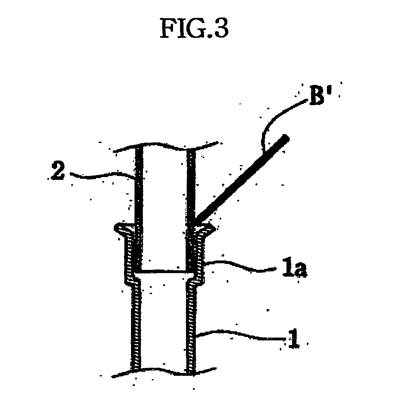

A brazing material, having the same composition as that of example 1, was produced in such a way that mixed powder was shaped into a wire rod with a diameter of 3 mm unlike a ring-shaped brazing material of example 1 during a machining process. While an end of the wire rod-shaped brazing material (B') was in contact with a joint of a copper pipe 1 and an aluminum pipe 2 as shown in FIG. 3, the joint was heated using a gas torch under atmospheric air instead of using an electric furnace to complete the brazing. Pressure and tension tests for a brazed portion of the resulting pipe were carried out" according to the same manner as example 2, leading to the desirable results like in example 2.

### EXAMPLE 6

The procedure of example 2 was repeated using a brazing material, having the same composition as that of example 1, to complete the brazing except that alloy powder contained Zn, Al, and Si mixed with each other in a weight ratio of 75:18:7.

At this time, a melting point of the alloy powder was 492°C, and a brazing test for the brazed portion of the resulting pipe was carried out according to the same manner as example 2, leading to the desirable results like in example 2.

### EXAMPLE 7

The procedure of example 6 was repeated except that a stainless steel pipe was used as a substitute for a copper pipe. In such a case, physical properties of a brazed portion were the same as the case of example 6.

### EXAMPLE 8

Alloy powder with a particle" size of 30 meshes or less, including Zn, Al, and Ag in a weight percentage of 80:19:1, was prepared using an atomizer, and 15 parts by weight of cesium fluoride-based flux, CsAlF₄, was added to 100 parts by weight of the alloy powder to produce mixed powder, including the alloy and flux powders uniformly mixed with each other (FIG. 1a).

In this respect, melting points of the alloy and flux powders were 460°C and 450°C, respectively.

After the mixed powder, containing the alloy and flux powders, was charged into a cylindrical molding vessel and subjected to a powder forging process to form a billet with a diameter of 85 mm and a length of 150 mm as shown in FIG. 1b, the billet, preliminarily heated at about 200°C, was extruded into a wire rod with a diameter of 1.6 mm using a hot extruder.

The wire rod was shaped into a ring-shaped brazing material with an internal diameter of 8 mm using a ring shaping machine at about 300°C, and the aluminum and copper pipes of example 2 were brazed using the ring-shaped brazing material while a temperature of the electric furnace of example 2 was reduced to 500°C, and heated for 5 min. Pressure and tension tests for a brazed portion of the resulting pipe were carried out according to the same manner as example 2, leading to the desirable results like in example 2.

### EXAMPLE 9

A brazing material, having the same composition as that of example 8, was produced according to the same procedure as example 8 except that an internal diameter of the brazing material was reduced to 6.7 mm.

Recently, a brazing of a commercial condenser, applied to a heat exchanger of an automobile, is conducted at about 620°C using an aluminum cladding material, and an aluminum base member is re-brazed with a pipe (Al-Mn based) at 500°C or less after a first brazing. With respect to this, demand for an improved brazing material is growing because a conventional soldering material has disadvantages of a corrosive flux and low brazing strength.
The ring-shaped brazing material was located on the condenser, which is applied to the heat exchanger of the automobile and firstly brazed, heated at 480 - 500°C using a gas torch for 3 - 5 min, and air cooled. A pressure test for the condenser were executed, resulting in the finding that a joint between tubes, spaced from a brazed portion, was ruptured, but the brazed portion of the condenser brazed using the brazing material of the present invention had higher strength than a first brazed portion of the condenser, a smooth surface, and an excellent brazing quality. 150 meshes and 480°C, respectively. CsAlF₄ as a cesium fluoride-based flux, and polyacrylic acid butyl liquid (a weight ratio of polyacrylic acid butyl : methanol was 1:10) as a binder were added to the alloy powder to produce paste-type brazing material. At this time, the alloy powder, the flux, and the binder were mixed with each other in a weight ratio of 70:18:12.

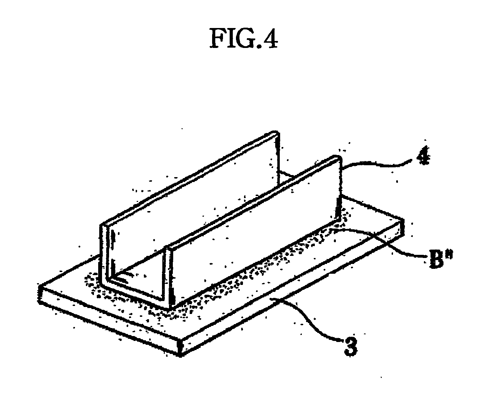

2 g of paste-type brazing material (B'') was applied on a copper plate 3 with a size of 10 mm (width) X 50 mm (length) X 3 mm (thickness) as shown in FIG. 4, and an aluminum bar 4 with a "U''-shaped section and a size of 8 mm. (base plane) X 10 mm (height) x 0.8 mm (thickness) X 40 mm. (length) was put on the resulting copper plate 3. The resulting structure was heated using an electric furnace at 550°C for 10 min, and then cooled at room temperature. At this time, nitrogen gas was fed into the electric furnace at a flow race of 2 m³/min.

After the completion of the brazing of the copper plate 3 and the aluminum bar 4 as described above, the brazing material was solidified between the copper plate 3 and the base plate of the aluminum beam 4. In such a case, when the copper place 3 and the aluminum bar 4 were separated from each other using a pair of tongs a brazed portion of the copper place 3 and the aluminum bar 4 was not ruptured, but a portion of a base member (aluminum bar) was ruptured. Therefore, the brazed portion had superior strength to the object member and an excellent brazing quality.

### EXAMPLE 11 (Comparative Example)

A flux, containing CsAlF₄ and a small amount of LiF mixed with each other, was used to improve an effect of the flux, and a weight ratio of CsAlF₄ to LiF was 10:1.

Furthermore, a composition and a producticn procedure of a brazing material, and a brazing process were the same as example 10. A rupture test was conducted for a brazed portion, and the results were the same as in the case of example 10.

### EXAMPLE 12 (Comparative Example)

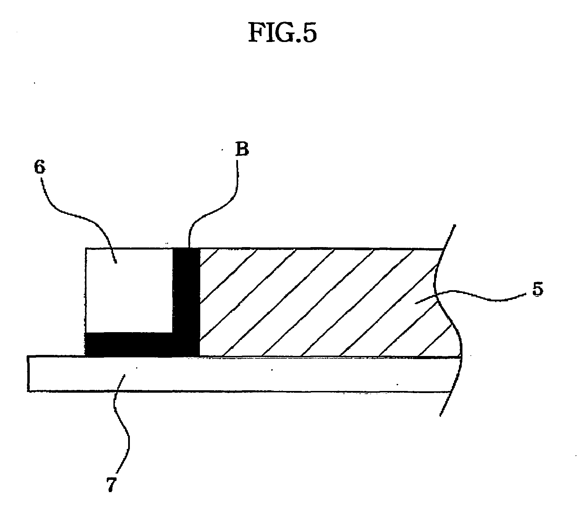

A main body 5 of an electric motor rotator, an aluminum flange 6, and a steel shaft 7 were brazed using the brazing material of example 10 according to the same procedure as example 8 as shown in FIG. 5, resulting in superior brazing strength. In such a case, a weight of the electric motor rotator was reduced and an appearance of the brazed portion was excellent.

### EXAMPLE 13 (Comparative Example)

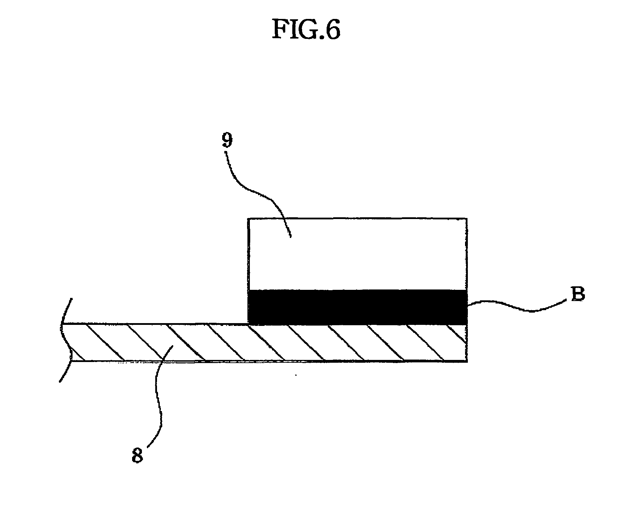

A spring material 8 for an electric contact point and main body 9 were brazed using the brazing material of example 10 according to the same procedure as example 8 as shown in FIG. 6, resulting in superior brazing properties, and the intrinsic physical properties of the spring material for the electric contact, point were maintained it was because the brazing was executed at low temperatures.

### EXAMPLE 14

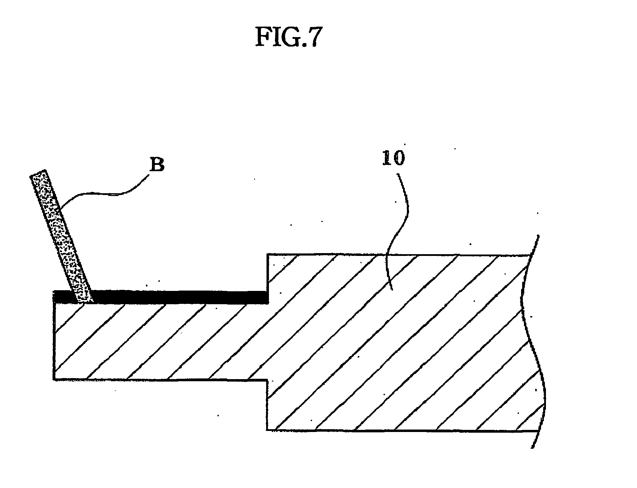

A steel shaft 10 was brazed using the wire rod-shaped brazing material of example 5 according to the same procedure as example 5 so as to thicken a partially worn portion and a fitting portion thereof as shown in FIG. 7, resulting in superior brazing properties, and the steel shaft of could be reused without being twisted because the brazing was conducted at low temperatures.

### EXAMPLE 15

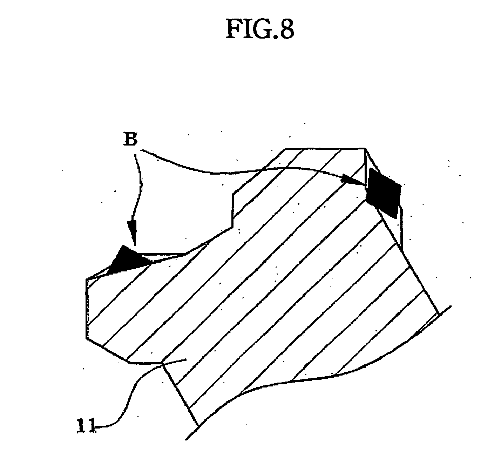

An alumium toothed wheel 11 was brazed using the wire rod-shaped brazing material of example 5 according to

the same procedure as example 5 so as to thicken an edge portion 11 thereof as shown in FIG. 8, resulting in superior brazing properties. With respect to this, the aluminum toothed wheel 11 could be reused through a simple process.

### Industrial Applicability

As described above, the present invention provides a flux-containing brazing material, which contributes to simplification of a brazing process due to omission of a flux application step in the brazing process and to improvement in a brazing quality by a proper control of an amount of a flux, and which can reduce costs of energy and a brazing time required for the brazing process because its melting point is lower than that of a conventional brazing material.

Furthermore, the flux-containing brazing material of the present invention is advantageous in that it can be applied to braze the same kinds of metals, for example, to braze copper with copper, or aluminum with aluminum, and can be also applied to braze the different kinds of metals, for example, to braze copper with" aluminum, copper with stainless steel, or aluminum with stainless steel.

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

1. A three dimensional shaped fiux-containing brazing material adapted to be brazed at low temperatures, which is used to braze same or different kinds of metal members with each other, comprising:
100 parts by weight of Zn alloy powder having a melting point of 450-500 °C, comprising 10 - 40 wt% of Al, Al+Si, Al+Ag, Al+Cu, Al+Ni, Al+Mn_{;} or Al+Sn, and Zn as a balance; and
10 - 40 parts by weight of cesium fluoride-based flux powder having a melting point of 440-500 °C, wherein the flux powder comprises 90 wt% or more CsAlF4 and 10 wt% or less LiF or KAlF4 mixed with each other,
wherein the alloy and flux powders are mixed with each other, and then processed into a three dimensional shape through a powder forging process and subsequent extrusion molding process.

2. The flux-containing brazing material as set forth in claim 1, wherein the alloy powder has a particle size of 30 meshes (550 µM) or less, and the flux powder has the smaller particle size than the alloy powder.

3. The flux-containing brazing material as set forth in claim 1, wherein the three dimensional shape is any one selected from the group consisting of a round bar, a flat bar, a pipe, a wire rod, and a ring.

## Patentansprüche

1. Dreidimensional geformtes, flussmittelhaltiges Hartlötmaterial zum Hartlöten bei niedrigen Temperaturen, welches geeignet ist, gleiche oder unterschiedliche Arten von Metallteilen miteinander zu verlöten, umfassend:
100 Gewichtsteile Zn-Legierungspulver mit einem Schmelzpunkt von 450 - 500 °C, enthaltend 10 - 40 Gew.-% Al, Al+Si, Al+Ag, Al+Cu, Al+Ni, Al+Mn oder Al+Sn, und Zn als Ausgleich; und
10 - 40 Gewichtsteile Flussmittelpulver auf Caesiumfluoridbasis mit einem Schmelzpunkt von 440 - 500 °C, wobei das Flussmittelpulver 90 Gew.-% oder mehr CsAlF₄ und 10 Gew.-% oder weniger LiF oder KAlF₄ in Mischung miteinander enthält,
wobei die Legierung und die Flussmittelpulver miteinander gemischt und anschließend durch ein Pulverschmiedeverfahren und ein nachfolgendes Strangpressverfahren in eine dreidimensionale Form gebracht werden.

2. Flussmittelhaltiges Lötmaterial gemäß Anspruch 1, wobei das Legierungspulver eine Partikelgröße von 30 Mesh (550 µm) oder weniger aufweist, und das Flussmittelpulver eine kleinere Partikelgröße als das Legierungspulver aufweist.

3. Flussmittelhaltiges Lötmaterial gemäß Anspruch 1, wobei die dreidimensionale Form ausgewählt ist aus der Gruppe bestehend aus einer Rundstange, einer Flachstange, einem Rohr, einem Stabdraht und einem Ring.

## Revendications

1. Matériau de brasage de forme tridimensionnelle contenant du flux conçu pour être brasé à basses températures, qui est utilisé pour braser des types identiques ou différents d'éléments métalliques les uns aux autres, comprenant :
100 parts en poids de poudre d'alliage de Zn ayant un point de fusion de 450 à 500°C, comprenant de 10 à 40 % en poids d'Al, d'Al+Si, d'Al+Ag, d'Al+Cu, d'Al+Ni, d'Al+Mn ou d'Al+Sn, le reste étant du Zn ; et
de 10 à 40 parts en poids de flux en poudre à base de fluorure de césium ayant un point de fusion de 440 à 500°C, le flux en poudre comprenant 90 % en poids ou plus de CsAlF4 et 10 % en poids ou moins de LiF ou de KAlF4 mélangés l'un à l'autre,
dans lequel l'alliage et les flux en poudre sont mutuellement mélangés, puis traités pour donner une forme tridimensionnelle par le biais d'un processus de forgeage des poudres et d'un processus de moulage par extrusion subséquent.

2. Matériau de brasage contenant du flux selon la revendication 1, dans lequel la poudre d'alliage a une taille de particule de 30 neshes (550 µm) ou moins, et le flux en poudre a une taille de particule inférieure à celle de la poudre d'alliage.

3. Matériau de brasage contenant du flux x selon la revendication 1, dans lequel la forme tridimensionnelle est n'importe quelle forme sélectionnée dans le groupe constitué d'une barre ronde, d'une barre plate, d'un tuyau, d'un fil machine et d'une bague.
